# NEW EUROPEAN PATENT SPECIFICATION

(11) **EP 2 417 858 B2**
(45) Date of publication and mention of the opposition decision: **14.02.2024**
(45) Mention of the grant of the patent: 20.05.2015
(21) Application number: 11177007.9
(22) Date of filing: 09.08.2011
(51) Int. Cl.: A23L 29/10, A23L 27/60, B01F 23/41, A23D 7/015, A23D 7/005, A23D 7/04, A23D 7/01

(54) **High pressure homogenization in combination with functionalized egg for production of emulsion-based food products**
Hochdruckhomogenisierung in Kombination mit funktionalisiertem Ei zur Herstellung von Lebensmittelprodukten auf Emulsionsbasis
Homogénéisation à haute pression en combinaison avec des oeufs fonctionnalisés pour la production de produits alimentaires à base d'émulsion

(30) Priority: 09.08.2010 US 371973 P; 10.08.2010 US 853944
(43) Date of publication of application: 15.02.2012
(73) Proprietor: Kraft Foods R & D, Inc., Deerfield, IL 60015 (US)
(72) Inventor: Eggeling, Joerg, 83059 Kolbermoor (DE); Bucky, Anthony Russell, 85579 Neubiberg (DE)
(74) Representative: Boult Wade Tennant LLP

(56) References cited:
- EP-A1- 0 716 811
- EP-A1- 1 222 957
- WO-A1-02/39833
- WO-A1-02/089602
- GB-A- 1 525 929
- JP-A- 2010 161 975
- US-B1- 6 635 777

## Description

### FIELD

The field relates generally to emulsion-based food products, and more specifically to mayonnaise products,

### BACKGROUND

Many mayonnaise products, dips, salad dressings, and other pourable or spoonable products are oil-in-water emulsions in which egg yolk and/or whole egg function as the emulsifier. Conventional mayonnaise products also contain vinegar, lemon juice, and seasonings. Egg yolk contains a natural emulsifier, lecithin. Oil-in-water emulsions have different properties, including viscosity and physical stability.

An emulsion is a preparation established with the use of an emulsifying agent and a deformable liquid (the internal or discontinuous phase) distributed in small globules throughout the body of a second liquid (the external or continuous phase). The continuous phase of the emulsion forms a layer adsorbed around the globules of the discontinuous phase. This generally modifies the forces of cohesion between these globules and the forces between these globules and the continuous phase. The globules of the discontinuous phase may be held together by London-van der Walls attraction forces and often form aggregates. Usually, the emulsifier is dissolved or dispersed in the continuous phase. An oil-in-water emulsion has oil as the discontinuous phase and an aqueous solution as the continuous phase.

It is generally advantageous to increase the viscosity of spoonable or pourable oil-in-water emulsion-type food products because such an increase in the viscosity of the emulsion permits the food products made therewith to achieve a desired level of viscosity with the use of a smaller amount of oil. The reduced quantity of oil necessary for the preparation of these food products advantageously results in health benefits and/or cost savings for preparing the food products. Additionally, the viscosity of oil-in-water emulsion food products is generally positively correlated with the physical stability of the food products. Thus, oil-in-water emulsion food products having a higher viscosity will generally also be more stable.

Conventional "full-fat" mayonnaise typically includes about 70-80 percent fat and about 6 to 9 percent whole egg or about 3 to 7 percent egg yolk. Because egg serves as the emulsifier for mayonnaise and is critical to sustaining the emulsion, reducing the egg content of the product requires the use of additional thickeners, such as starch or gums, and/or chemical emulsifiers in order to achieve the necessary texture and consistency (e.g., viscosity) in the mayonnaise. However, incorporation of effective amounts of starch or gum can adversely affect the mouthfeel and flavor of the product. Incorporating chemical emulsifiers can impart off flavors in the food product and consumers often perceive such chemical emulsifiers as artificial and, thus, as undesirable.

Conventional mayonnaise products are typically homogenized using a colloid mill. Homogenization by colloid mill provides low to medium shear and results in oil droplet sizes in the range of about 3 to about 50 microns.

Attempts to incorporate increased shear, such as with high pressure homogenization, to provide emulsions with smaller oil droplet sizes have generally encountered difficulties that necessitated modifications to the formulation or processing, or which provided inferior products.

EP 1222957 A1 to Société des Produits Nestle S.A. describes preparing a pre-emulsion, then pumping the pre-emulsion at a pressure between 10 to 100 bars, and obtaining an emulsion with an oil droplet size of less than 10 microns and a viscosity between 1 to 50 Pa·s, which indicates a relatively thin product. This reference also described use of a large amount (6 percent) of modified egg yolk to make its emulsion.

U.S. Patent No. 5,773,072 discloses a process for preparing an oil-in-water emulsion involving combining to 82 percent oil, 0.1 to 20 percent egg yolk, salt and/or sugar, water, and 0.1 to 5 percent diacetyl tartaric acid ester of monoglyceride (DATEM) and homogenizing at 50 to 150 bar. DATEM is a known emulsifier. The egg yolk is described as commercially available egg yolk separated from egg white. The viscosity of the products is not described.

U.S. Patent Application Publication No. 2002/0197382 discloses a reduced-fat oil-in-water emulsion. The reduced-fat emulsion is described as having a similar thickness to high fat mayonnaise. The emulsion includes 0.05 to 10 percent egg yolk or a calculated amount of egg yolk-derived product (on the basis of raw egg yolk), 0.01 to 1 percent casein salt and 30 to 75 percent oil. The reference states that the thickness of the product can be adjusted by varying homogenization pressure and amount of casein salt, with less pressure being needed for homogenization when more casein salt is used. The examples compared the viscosity of a formulation with, among other ingredients, 50 percent oil, 5 percent fortified stabilized egg mix, and no water-soluble form of casein versus the same formulation with 0.15 percent sodium caseinate. The formulation without casein had a Stevens value of only 43 and the formulation with sodium caseinate had a Stevens value of 189. Formulations with the same amount of oil but higher amounts of sodium caseinate and fortified stabilized egg mix had higher viscosity levels.

U.S. Patent Application Publication No. 2008/0254194 discloses a water-continuous oil-and-water emulsion containing fractionated egg. Specifically, the emulsion is described as including 5 to 90 percent oil phase, 10 to 95 percent aqueous phase, 0.3 to 30 percent egg yolk granule proteins by weight of the aqueous phase, and 0.05 to 10 percent egg yolk plasma protein by weight of the aqueous phase. The emulsion is homogenized by colloid mill, high pressure homogenizer, or inline homogenizer. The dispersed oil phase of the emulsion is described as having a mean diameter (d3,2) in the range of 2 to 20 microns. The application reports that the egg yolk granule proteins have a prominent stabilizing effect in acidic emulsions and result in increased firmness of the emulsion. Similar recipes without egg yolk granule proteins have substantially lower viscosity.

JP 2010 161975 discloses a method for producing an acid oil-in water emulsion food.

There remains a need for emulsion-based food products that can be readily produced that provide creamy mouthfeel and good viscosity. There also remains a need for emulsion-based food products that meet consumer demand for lower fat content than conventional products with similar creaminess and viscosity but with lower amounts of added thickeners.

### SUMMARY

A high fat emulsion-based food product and method for preparing and using the high fat emulsion-based food product are provided. In one aspect, the emulsion-based food product is provided by treating oil, water, edible acidulant, and enzyme-modified egg in a high pressure homogenizer to provide an emulsion having about 55 to about 72 percent oil with significantly higher viscosity and smaller average fat droplet size than provided in conventional products having the same fat and stabilizer content The high fat emulsion-based food products provided herein provide superior creamy mouthfeel and the sensorical impression of higher fat content. This disclosure further provides an emulsion that allows for substantially reduced levels of protein as compared to conventional emulsion-based products in order to provide the same or similar viscosity at the same fat content.

In another aspect, the high fat emulsion-based food product can be used to provide other food products having a variety of fat contents, Incorporation of the high fat emulsion into other products can advantageously provide food products having substantially reduced levels of starch as compared to conventional products in order having the same or similar viscosity at the same fat content.

A process is provided for preparing an emulsion-based food product having improved emulsification and viscosity. The process comprises (1) combining water, enzyme-modified egg, edible acidulant, and oil to form a mixture; and (2) treating the mixture with high pressure homogenization for a time and at a pressure effective to provide an oil-in-water emulsion having a viscosity of about 200 to about 400 Pa·s when measured at room temperature (i.e., about 20 to about 25 degrees Celsius) twenty-four hours after homogenization and an average fat droplet size of about 0.8 to about 10 microns.

In another aspect, a process is provided for preparing an emulsion-based food product having improved emulsification and viscosity, the process comprising: (1) combining water, enzyme-modified egg, edible acidulant, and oil to form a mixture; (2) forming the mixture into a pre-emulsion; and (3) treating the pre-emulsion with high pressure homogenization for a time and at a pressure effective to provide an emulsion having a viscosity of about 200 to about 400 Pa·s when measured at room temperature twenty-four hours after homogenization and an average fat droplet size of about 0.8 to about 10 microns. It was found that the viscosity of the emulsion generally had a higher viscosity if a pre-emulsion was formed prior to high pressure homogenization.

In the methods provided herein, about 20 to about 40 percent water, about 0.2 to about 2.0 percent enzyme-modified egg, about 55 to about 72 percent oil, and an acidulant are combined. The acidulant is added to provide an emulsion having a titratable acidity of about 0.3 to about 1 percent (w/w) based on acetic acid equivalents. By one approach, the acidulant is added immediately before homogenization (such as within a few minutes) in order to provide maximal egg functionality.

In one aspect the amount of egg is selected so as to provide less than about 0.6 percent protein in the emulsion. In another aspect, the amount of egg is selected so as to provide less than about 0.5 percent protein in the emulsion. In another aspect, the amount of egg is selected so as to provide less than about 0.4 percent protein in the emulsion. In another aspect, the amount of egg is selected so as to provide less than about 0.3 percent protein in the emulsion. In yet another aspect, the amount of egg is selected so as to provide less than about 0.2 percent protein in the emulsion. In another aspect, the amount of egg is selected so as to provide less than about 0.1 percent protein in the emulsion.

The enzyme-modified egg used in the compositions and methods described herein is phospholipase-treated egg yolk. In one aspect, about 50 to about 100 percent of the phospholipids in the egg yolk are converted to lysophospholipids. In another aspect, at least about 50 percent of the phospholipids in the egg yolk are converted to lysophospholipids. In another aspect, at least about 60 percent of the phospholipids in the egg yolk are converted to lysophospholipids. In another aspect, at least about 70 percent of the phospholipids in the egg yolk are converted to lysophospholipid. In yet another aspect, at least about 80 percent of the phospholipids in the egg yolk are converted to lysophospholipids. In another aspect, at least 90 percent of the phospholipids in the egg yolk are converted to lysophospholipids. Lysophospholipids are believed to contribute to the emulsifying properties of egg. Generally, the egg has already been treated with phospholipase prior to incorporation into the compositions and methods described herein.

Other ingredients may also be included in the initial mixing of the water, oil, edible acidulant, and enzyme-modified egg prior to homogenization.

A hydrocolloid stabilizer is added prior to high pressure homogenization at about 0,01 percent to about 0.15 percent based on the weight of the emulsion. In another aspect, the hydrocolloid stabilizer is added at about 0.03 percent to about 0.1 percent. In another aspect, the hydrocolloid stabilizer is added at about 0.05 percent to about 0.09 percent.

Homogenization is carried out at high pressure to provide the emulsion. Generally, pressures of about 10 to about 300 bar can be used. In another aspect, pressures of about 50 to about 200 bar can be used. The homogenization pressure used may depend on whether the high pressure homogenization is a one or two step homogenization process and the type of equipment used. Generally, two stage homogenization is preferred with the first stage at a pressure between about 10 to about 100 bar, in one aspect between, about 50 to about 90 bar, and the second stage at a pressure between about 10 to about 100 bar, in one aspect between about 20 to about 40 bar. In some cases, it may be advantageous to have the first stage of homogenization at a pressure greater than or equal to the pressure in the second stage. By one approach, the pressure used in the second stage may be about 10 to about 20 percent of the pressure used in the first stage. By another approach, homogenization may be carried out using a flow rate of about 7000 liters/hour.

The high pressure homogenization advantageously reduces the average droplet size of the oil phase of the emulsion to about 0.8 to about 10 microns. In one aspect, the average oil droplet size is between about 0.8 to about 5 microns. In another aspect, the average oil droplet size is between about 0.8 to about 2 microns. In yet another aspect, the average oil droplet size is between about 0.8 to about 1.5 microns, The viscosity of the emulsion can be measured at a variety of time points, Generally, the viscosity of the emulsion increases significantly within about twenty-four hours after homogenization. When measured immediately (i.e., less than about 3 minutes) after high pressure homogenization, the emulsion has a viscosity ranging from about 150 to about 250 Pa·s. In another aspect, the emulsion has a viscosity from about 160 to about 240 Pa·s. In another aspect, the emulsion has a viscosity from about 180 to about 220 Pa·s. When the viscosity is measured at room temperature twenty-four hours after homogenization, the viscosity ranges from about 200 to about 400 Pa·s, In another aspect, the emulsion has a viscosity from about 250 to about 350 Pa·s. In another aspect, the emulsion has a viscosity from about 275 to about 325 Pa·s.

After homogenization, additional ingredients, such as flavorings, spices, thickeners, sweeteners, and water can be added, if desired. In one aspect, ingredients added after high pressure homogenization can be utilized to reduce the percentage of fat in the final product while still providing desirable viscosity and creamy mouthfeel in the final product. In one aspect, it is preferred to add about 0.5 to about 2.5 percent starch when the amount of oil in the product is decreased to about 40 to about 55 percent based on the weight of the final product.

In one aspect, the emulsion produced by high pressure homogenization can be used as a pre-mix for making a mayonnaise-type or other dressing-type product. In this aspect, the pre-mix is combined with a cooked and cooled water-starch mixture to provide a mayonnaise-type dressing having substantially lower oil content than the emulsion upon which it was based yet still provide a desirable spoonable viscosity of about 40 to about 175 Pa·s, in another aspect about 50 to about 125 Pa·s, and in another aspect about 50 to about 90 Pa·s when measured within three minutes of mixing the product. When measured at room temperature at twenty-four hours after mixing, the viscosity is typically between about 150 to about 300 Pa·s, in another aspect between about 175 to about 250 Pa·s, and in another aspect between about 180 to about 220 Pa·s.

The emulsion-based food products described herein can be used to make mayonnaise, savory sauces, dressings, and the like. The emulsified egg product can also be used in bakery items and desserts, such as custards, cakes, pies, and the like.

### BRIEF DESCRIPTION OF THE DRAWINGS

FIG. 1 is a flow chart generally illustrating the preparation of an emulsion-based food product in accordance with an exemplary embodiment.
FIG. 2 is a flow chart generally illustrating the preparation of an emulsion-based food product in accordance with an exemplary embodiment
FIG. 3(A) is an NMR spectrogram for an inventive emulsion prepared according to Example 1.
FIG. 3(B) is an NMR spectrogram of a commercially-available mayonnaise product.
FIG. 3(C) is an NMR spectrogram of a commercially-available mayonnaise product.
FIG. 4 is an NMR spectrogram of a mayonnaise product produced with the inventive emulsion of Example 1.

### DETAILED DESCRIPTION

A high fat emulsion-based food product and method for preparing and using the high fat emulsion-based food product are provided. In one aspect, the high fat emulsion-based food product is provided by treating oil, water, edible acidulant, and enzyme-modified egg in a high pressure homogenizer to provide significantly smaller fat droplets than provided by conventional mayonnaise production. Generally, the high fat emulsion-based food product contains about 55 to about 72 percent fat. It was found that emulsions with about 55 to about 72 percent fat and a small fat droplet size provide superior creamy mouthfeel and the sensorical impression of higher fat content. This disclosure further provides an emulsion that allows for substantially reduced levels of protein as compared to conventional emulsion-based products in order to provide the same or similar viscosity at the same fat content.

It was advantageously found that the high fat emulsion produced by high pressure homogenization could be used to provide food products having a variety of fat contents having superior mouthfeel, creaminess, and viscosity as compared to conventional products having the same fat content. This disclosure further provides an emulsion that allows for substantially reduced levels of starch as compared to conventional emulsion-based products in order to provide the same or similar viscosity at the same fat content.

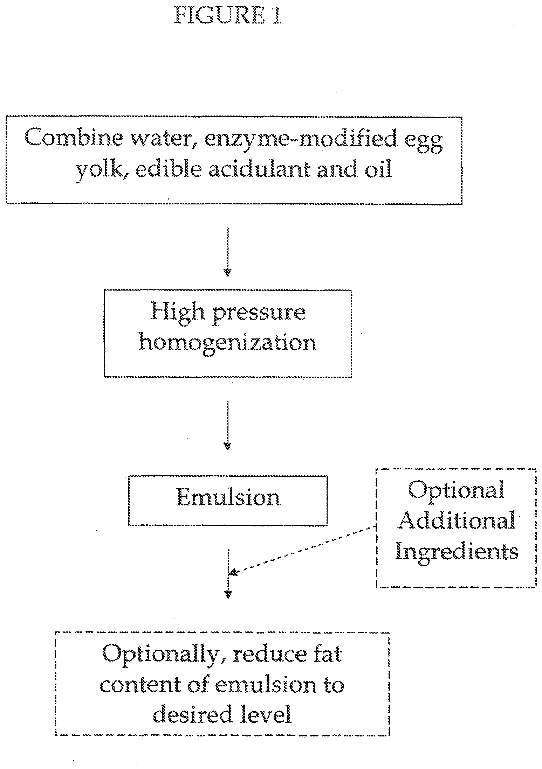

FIG. 1 provides a flow chart illustrating a process in accordance with one embodiment presented herein. It has been found that preparing a high fat emulsion-based food product under the conditions described herein provides a composition with improved viscosity and emulsification. In this aspect, the process comprises, (1) combining water, edible acidulant, enzyme-modified egg, and oil to form a mixture; and (2) treating the mixture with high pressure homogenization for a time and at a pressure effective to provide a high fat emulsion having a viscosity of about 200 to about 400 Pa·s when measured at room temperature (i.e., about 20 to about 25 degrees Celsius) twenty-four hours after homogenization and having an average fat droplet size of about 0.8 to about 10 microns.

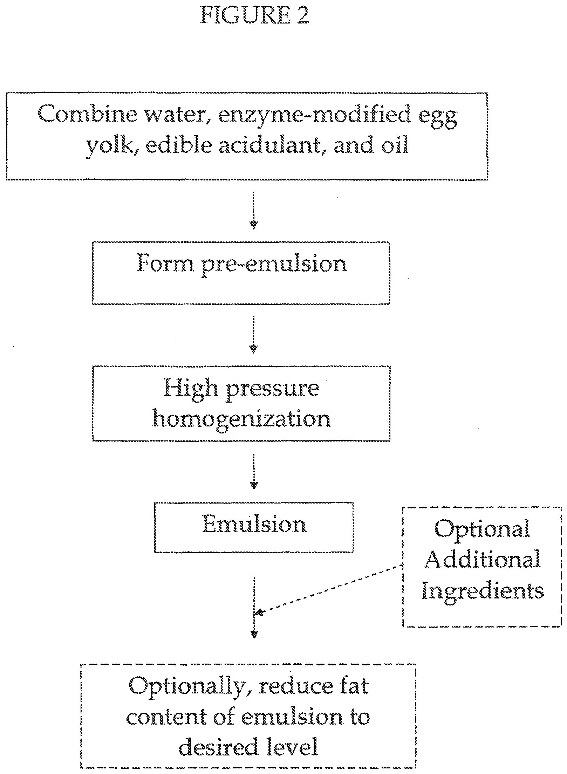

FIG. 2 provides a flow chart illustrating a process in accordance with one embodiment presented herein for preparing a high fat emulsion-based food product. It has been found that preparing a high fat emulsion-based food product under the conditions described herein provides a composition with improved emulsification and viscosity. In this aspect, the process comprises: (1) combining water, edible acidulant, enzyme-modified egg, and oil to form a mixture; (2) forming the mixture into a pre-emulsion; and (3) treating the pre-emulsion with high pressure homogenization for a time and at a pressure effective to provide a high fat emulsion having a viscosity of about 200 to about 400 Pa·s when measured at room temperature twenty-four hours after homogenization and having an average fat droplet size of about 0.8 to about 10 microns. The pre-emulsion formed prior to high pressure homogenization generally is an oil-in-water emulsion in which the oil droplets are much larger in size than in the final emulsion after high pressure homogenization. The pre-emulsion can be provided by any suitable instrument or machine, including, for example, a pin mixer. By one approach, a Leusomix apparatus from Luishuis Projects & Engineering B.V., (Hengolo, Netherlands) can be used, It was found that forming a pre-emulsion prior to high pressure homogenization provided a higher viscosity emulsion after homogenization than when a pre-emulsion was not formed prior to high pressure homogenization.

In the methods provided herein, about 20 to about 40 percent water, about 0.2 to about 2.0 percent enzyme-modified egg, about 55 to about 72 percent oil, and an acidulant are combined. The acidulant is added to provide an emulsion having a titratable acidity of about 0.3 to about 1 percent (w/w) based on acetic acid equivalents. By one approach, the acidulant is added immediately before homogenization (such as within a few minutes) in order to provide maximal egg functionality.

The combination of using enzyme-modified egg and high pressure homogenization was found to be important for providing the desired viscosity and small particle size in the resulting emulsion when the emulsion has a fat content of about 55 percent to about 72 percent. Use of the same or similar amount of natural egg (i.e., egg that has not been treated enzymatically) in a similar recipe with substantially the same fat content during high pressure homogenization would result in an unacceptably low viscosity emulsion. While not wishing to be bound by theory, it is believed that, during high pressure homogenization, the enzyme-modified egg is able to coat the small oil droplets to provide the emulsion, Unmodified egg is unable to coat the large surface area of the small oil droplets created during high pressure homogenization, which results in a failure to form a viscous emulsion.

The enzyme-modified egg that can be used in the compositions and methods described herein includes egg that has been functionalized. The enzyme-modified egg includes egg yolk that has been treated with phospholipase, such as phospholipase A1 or A2, but generally phospholipase A2 is preferred. One suitable enzyme is MAXAPAL(R) A2, which is a phospholipase A2 which hydrolyzes phospholipids in egg yolk to lysophospliolipids and fatty acids.

By one approach, a large percentage of the phospholipids in the yolk are converted to lysophospholipids. In one aspect, about 50 to about 100 percent of the phospholipids in the egg yolk are converted to lysophospholipids. In another aspect, at least about 50 percent of the phospholipids in the egg yolk are converted to lysophospholipids. In another aspect, at least about 60 percent of the phospholipids in the egg yolk are converted to lysophospholipids. In another aspect, at least about 70 percent of the phospholipids in the egg yolk are converted to lysophospholipids. In yet another aspect, at least about 80 percent of the phospholipids in the egg yolk are converted to lysophospholipids. In another aspect, at least 90 percent of the pliospholipids in the egg yolk are converted to lysophospholipids. Lysophospholipids are believed to contribute to the emulsifying properties of egg yolk. The conversion of phospholipids to lysophospholipids can be determined by HPLC, such as described by Lesnefsky et al., Analytical Biochemistry, 285: 246-54 (2000).

Generally, the egg yolk has already been treated with phospholipase prior to incorporation into the compositions and methods described herein. A variety of sources of egg may be employed to prepare the food products described herein. Sources of egg yolk include, for example, non-salted egg yolks, salted egg yolks, and egg yolk powder that comprises yolk that has been treated with phospholipase. Powdered enzyme-modified egg yolk products are preferred. One exemplary commercially-available enzyme-modified egg yolk product is Emultherm KSMS from OVOBEST Eiprodukte GmbH & Co. KG (Germany).

Presuming a powdered egg product is used, the amount of enzyme-modified egg is generally between about 0.2 to about 2 percent based on the weight of the emulsion-based food product. In another aspect, the emulsion-based food product includes about 0.5 to about 1.5 percent enzyme-modified egg. In another aspect, the emulsion-based food product includes about 0.8 to about 1.3 percent enzyme-modified egg. If liquid enzymes-modified egg is used, the amount of egg added should be increased appropriately to adjust for the water content of the liquid egg.

In one aspect, the amount of egg is selected so as to provide less than about 0.6 percent protein in the emulsion. In another aspect, the amount of egg is selected so as to provide less than about 0.5 percent protein in the emulsion. In another aspect, the amount of egg is selected so as to provide less than about 0.4 percent protein in the emulsion. In another aspect, the amount of egg is selected so as to provide less than about 0.3 percent protein in the emulsion. In yet another aspect, the amount of egg is selected so as to provide less than about 0.2 percent protein in the emulsion. In another aspect, the amount of egg is selected so as to provide less than about 0.1 percent protein in the emulsion.

The oil used herein can be any food grade oil that is liquid at refrigeration temperatures. Suitable oils include, for example, canola oil, soybean oil, safflower oil, sunflower oil, peanut oil, corn oil, winterized olive oil, and combinations thereof. About 55 to about 72 percent oil is used based on the weight of the emulsion-based food product. In another aspect, about 60 to about 72 percent oil is used. In another aspect, about 65 to about 68 percent oil is used.

The amount of water from all sources in the emulsion-based food product ranges from about 20 to about 40 percent of the total weight of the product. In one aspect, the amount of water is about 25 to about 35 percent and, in another aspect, the amount of water is about 28 to about 32 percent. Generally, the temperature of the water before being combined with the enzyme-modified egg, edible acidulant, and oil is between about 5 to about 30 degrees Celsius, in one aspect between about 10 to about 20 degrees Celsius.

Other ingredients may also be included in the initial mixing of the water, oil, acidulant, and enzyme-modified egg prior to high pressure homogenization. In one aspect, a hydrocolloid stabilizer is added prior to high pressure homogenization. In one form, xanthan gum can be used as the hydrocolloid. Other suitable hydrocolloids include, for example, locust bean gum and guar gum. Generally, the hydrocolloid stabilizer is added at about 0.01 to about 0.15 percent based on the total weight of the ingredients of the emulsion after high pressure homogenization. In another aspect, the hydrocolloid stabilizer is added at about 0.05 to about 0.08 percent. In one aspect, the hydrocolloid stabilizer can be added, prior to the high pressure homogenization step.

The inclusion of an edible acidulant (i,e., a food-grade acidulant), or a mixture of edible acidulants, as a preservative in the emulsion-based food product provides microbial stability, lowers the pH, and imparts desirable flavor to the emulsion. For example, any of a wide variety of edible acids, salts thereof, other preservatives, and combinations thereof can be used to prepare the emulsion-based food product. Suitable edible acidulants include, for example, vinegar, citric acid, lactic acid, phosphoric acid, and sorbic acid, each of which are effective to inhibit the growth of bacteria, yeasts, and mold.

The amount of the edible acidiculant employed in the compositions described herein should generally provide about 0.3 to about 1 percent titratable acidity based upon acetic acid, and, in one aspect between, ranges from about 0.4 percent to about 0.7 percent. A sufficient amount of the edible acidiculant should be employed in the preparation of the food product to maintain the pH of the emulsion-based food product below about pH 4.0 and, in one aspect, below about pH 3.8. If such a pH for the composition is not maintained, the microstabllity of the composition (the ability of the composition to be stored for periods of time without the growth of various molds or the invasion of other undesirable microorganisms) will be significantly reduced.

The above described ingredients can be combined all at once or in a variety of combinations. In one aspect, the oil can be added all at once. In another aspect, the oil can be added in two more steps. By one approach, the enzyme-modified egg can be combined with oil prior to mixing with the remaining ingredients, In one aspect, the enzyme-modified egg is combined with oil, with the oil being added in amount of about five times to about 15 the amount of enzyme-modified egg. In another aspect, oil in an amount of about 8 to about 12 times the amount of enzyme-modified egg is used. By one approach, the oil and enzyme-modified egg can then be combined with the hydrocolloid prior to being combined with the remaining quantity of oil, as well as the water and edible acidulant.

In the methods described herein, homogenization is carried out at high pressure to provide the emulsion. Generally, pressures of about 10 to about 300 bar can be used. In another aspect, pressures of about 50 to about 200 bar can be used. The homogenization pressure used may depend on whether the high pressure homogenization is a one or two step homogenization process and the type of equipment used. Generally, two stage homogenization is preferred with the first stage at a pressure between about 10 to about 100 bar, in another aspect between about 50 to about 90 bar, and the second stage at a pressure between about 10 to about 100 bar, in another aspect between about 20 to about 40 bar. In some cases, it may be advantageous to have the first stage of homogenization at a pressure greater than or equal to the pressure in the second stage. By one approach, the pressure used in the second stage may be about 10 to about 20 percent of the pressure used in the first stage, By another approach, homogenization may be carried out using a flow rate of about 7000 liters/hour.

The high pressure homogenization, advantageously reduces the average droplet size (mean volume diameter) of the oil phase of the emulsion to about 0.8 to about 10 microns. In one aspect, the average oil droplet size is between about 0.8 to about 5 microns. In another aspect, the average oil droplet size is between about 0.8 to about 2 microns. In yet another aspect, the average oil droplet size is between about 0.8 to about 1.5 microns. Oil droplet size can be measured by any known methods, such as by laser diffraction using known techniques and instruments. For example, a Mastersizer 2000 (Malvern Instruments of Malvern, Worchestershire, United Kingdom) can be used.

The viscosity of the emulsion can be measured at a variety of time points. The viscosity of the emulsion typically increases significantly during the first twenty-four hours after homogenization. Viscosity can be measured with a Brookfield viscometer (spindle T-C at 2.5 rpm), When measured immediately (i.e., less than about 3 minutes) after high pressure homogenization, the emulsion has a viscosity ranging from about 150 to about 250 Pa·s. In another aspect, the emulsion has a viscosity from about 160 to about 240 Pa·s. In another aspect, the emulsion has a viscosity from about 180 to about 220 Pa·s. When the viscosity is measured at room temperature (i.e., about 20 to about 25 degrees Celsius) twenty-four hours after homogenization, the viscosity ranges from about 200 to about 400 Pa·s. In another aspect, the emulsion has a viscosity from about 250 to about 350 Pa·s. In another aspect, the emulsion has a viscosity from about 275 to about 325 Pa·s.

The oil-in-water emulsions produced, herein can be evaluated for physical stability using known methods, such as, for example, the procedure described by Titus et al., "Emulsifier Efficiency in Model Systems of Milk Fat or Soybean Oil and Watery Food Technology, 22:1449 (1968); and by Acton et all "Stability of Oil-in-Water Emulsions. 1. Effects of Surface Tension, Level of Oil, Viscosity and Type of Meat Protein," J. Food. Sci., 35:852 (1970). Additional information concerning the formation and testing of oil-in-water emulsions is present in Bencher, Encyclopedia of Emulsion Technology (Volume 1, Basic Theory, Marcel Dekker, Inc., New York (1983)), and Sherman, Emulsion Science (Academic Press, New York (1968)).

The fat content of the emulsion generally should be less than about 72 percent in order to achieve the desired small droplet size. A fat content greater than about 72 percent generally fails to achieve the desired droplet size. It was surprisingly found that the emulsion-based food product was able to achieve the desired viscosity at such high fat levels (i.e., about 55 to about 72 percent fat). It had been conventionally thought that at these fat levels, particularly at the higher end of the range, the water content is too low to drive the emulsification process to such an extent that sufficiently small droplets and high viscosities can be achieved.

The emulsion produced by high pressure homogenization is suitable for use as an emulsion-based food product without further addition of ingredients. By one approach, the emulsion is substantially free of starch. By the term "substantially free of starch," it is meant that the emulsion includes less than a functional (e.g., thickening) amount of starch. By one approach, the emulsion contains less than about 1 percent starch. By another approach, the emulsion contains less than about 0.5 percent starch. By another approach, the emulsion contains less than about 0.1 percent starch. By another approach, the emulsion contains 0 percent starch.

In another aspect, the emulsion is substantially free of emulsifiers other than the enzyme-modified egg added prior to high pressure homogenization. By the term "substantially free of emulsifiers," it is meant that the emulsion includes less than a functional (e.g., emulsifying) amount of emulsifier other than the enzyme-modified egg. By one approach, the emulsion contains less than about 1 percent emulsifier other than the enzyme-modified egg. By another approach, the emulsion contains less than about 0.5 percent emulsifier other than the enzyme-modified egg. By another approach, the emulsion contains less than about 0.1 percent emulsifier other than the enzyme-modified egg. By another approach, the emulsion contains no emulsifier other than the enzyme-modified egg. Specifically, by one approach, the emulsion includes no DATEM.

The emulsion includes no protein other than that contributed by the enzyme-modified egg. The emulsion is free of dairy proteins, meat proteins, vegetable proteins, and any other type of protein not contributed by the enzyme-modified egg added prior to high pressure homogenization.

By another approach, the emulsion consists essentially of about 55 to about 72 percent oil, about 0.2 to about 2.0 percent enzyme-modified egg, about 20 percent to about 40 percent water, and edible acidulant. By another approach, the emulsion consists essentially of about 55 to about 72 percent oil, about 0.2 to about 2.0 percent enzyme-modified egg, about 20 percent to about 40 percent water, about 0.01 to about 0.15 percent hydrocolloid stabilizer, and edible acidulant.

By yet another approach, the emulsion includes an emulsion-modifying ratio of oil to enzyme-modified egg that is effective to achieve the desired viscosity and oil droplet size. By one approach, the oil. and enzyme-modified egg are provided in a ratio from about 27.5:1 to about 360:1. By another approach, the oil and enzyme-modified egg are provided in a ratio from about 36:1 to about 144:1. By another approach, the oil and enzyme-modified egg are provided in a ratio from about 42:1 to about 90:1.

After the effective treatments described above, if desired, the high fat emulsion can be used as a premix or intermediate to provide food products having a wide variety of fat contents. As shown in the dotted lines of FIGS. 1 and 2, these optional additional ingredients can be added after the high pressure homogenization step to reduce the total fat content of the emulsion to a desired level. By use of the high fat emulsion prepared by high pressure homogenization as described herein, it was advantageously found that food products having a variety of fat contents could be provided that had superior mouthfeel, creaminess, and viscosity as compared to conventional products having the same fat content. This disclosure further provides an emulsion that allows for substantially reduced levels of starch as compared to conventional emulsion-based products in order to provide the same or similar viscosity.

In this respect, the emulsion produced from high pressure homogenization can be used as a pre-mix and combined with other ingredients to provide a lower fat product while still providing remarkable emulsion stability and viscosity suitable for use as a spoonable mayonnaise product. For example, if the emulsion produced from high pressure homogenization has an oil content of about 55 to about 72 percent, the emulsion can then be combined with other ingredients, including, for example, a cooked and cooled starch water mix, to reduce the amount of oil in the final product to about 40 to about 55 percent. By one approach, addition of about 0.5 to about 2.5 percent starch can be advantageous when the amount of oil in the product is decreased to about 40 to about 55 percent. The resulting product may be a mayonnaise-type dressing having substantially lower oil content than the emulsion upon which it was based.

In one aspect, the optional ingredients can be added to the emulsion produced by high pressure homogenization to provide a mayonnaise-type dressing having a wide range of fat contents, with viscosity being built progressively more by thickening agents like starch and hydrocolloids as the fat content and emulsion contribution to the texture is reduced.

Starch generally contributes to the shelf-stability and taste of the final product, particularly when the final product has an oil content of less than about 72 percent, it should be noted that starch should not be added prior to high pressure homogenization because its thickening ability will be greatly reduced due to destruction of the granular structure within the homogenizer. The starch may be provided by wheat, maize, waxy maize, rice or other food starches. Modified waxy maize starch is particularly preferred, because it provides a stable desirable texture during shelf life in such acidified products.

By one approach, the additional ingredients can be added in amounts effective to reduce the fat content of the final product to a desired level. While products having very low fat contents (i.e., down to about 10 percent fat) can be provided in accordance with the methods herein, generally, however, it is not recommended to reduce the fat content below about 40 percent if a full fat-like texture is desired, because it is the emulsion which provides the creamy mouthfeel, and even with the very small oil droplets provided, creaminess will eventually be compromised as the fat level is reduced.

In one aspect, ingredients can be added which contribute to the flavor of the product. Sweeteners may, optionally, be employed in the emulsion-based food products in an amount ranging from about 0 to about 10 percent of the total weight of the food products and, in one aspect, ranging from about 2 percent to about 5 percent. Sweeteners, such as sucrose, dextrose, fructose, glucose, mannose, galactose, xylose, sorbose, tagatose, ribulose, xylulose, maltose, lactose, cellobiose, raffinose, erythritol, mannitol, factilol, sorbitol, xylitol, light or dark corn syrup, and synthetic sweeteners, may be employed, if desired. Salt may, optionally, be employed in the emulsion-based food products in an amount ranging from about 0 to about 2.5 percent of the total weight of the dressings, and, in one aspect, ranging from about 1 percent to about 2 percent. Spices and flavoring may also be added. Examples of spices include pepper, garlic powder, onion powder, parsley, and the like. Examples of flavorings which include vegetable flavors, meat flavors, dairy flavors, lemon juice or lemon juice concentrate, vinegar, and the like. As those skilled in the art will recognize, other ingredients, such as water, can also be included, if desired, so long as incorporation of the ingredient does not substantially disrupt the stability of the emulsion.

In one aspect, the final product having less than 55 percent fat has a desirable spoonable viscosity of about 40 to about 175 Pa·s, in another aspect about 50 to about 125 Pa·s, and in another aspect about 50 to about 90 Pa·s when measured within three minutes of mixing the product. When measured at room temperature at twenty-four hours after mixing, the viscosity is typically between about 150 to about 300 Pa·s, in another aspect between about 175 to about 250 Pa·s, and in another aspect between about 180 to about 220 Pa·s.

In one aspect, the emulsion produced by high pressure homogenization can be used as a pre-mix for making a mayonnaise-type or other dressing-type product. In this aspect, the pre-mix is combined with a cooked and cooled water-starch mixture (e.g., mixture of starch and water cooked at about 92 degrees Celsius for about five minutes and cooled to about 35 degrees Celsius) to provide a mayonnaise-type dressing having substantially lower oil content than the emulsion upon which it was based yet still provide a desirable spoonable viscosity of about 40 to about 175 Pa·s, in another aspect about 50 to about 125 Pa·s, and in another aspect about 50 to about 90 Pa·s when measured within three minutes of mixing the product. When measured at room temperature at twenty-four hours after mixing, the viscosity is typically between about 150 to about 300 Pa·s, in another aspect between about 175 to about 250 Pa·s, and in another aspect between about 180 to about 220 Pa·s,

By one approach, the starch can be combined with flavorings, salt, and sweetener prior to cooking the starch. The starch can be cooked at about 92 degrees Celsius for about five minutes and cooled to about 35 degrees Celsius to provide a starch base that can be combined with additional ingredients or added directly to the emulsion from the high pressure homogenization step to form a food product having less than 55 percent oil.

In one aspect, the emulsion-based food product having less than 55 percent fat includes no protein other than that contributed by the enzyme-modified egg. By one approach, the emulsion is free of dairy proteins, meat proteins, vegetable proteins, and any other type of protein not contributed by the enzyme-modified egg added prior to high pressure homogenization,

The optional ingredients can be added by conventional mixing techniques and equipment. The pressure employed, the shear rate, and/or the time for mixing may vary widely dependent upon the particular equipment employed. For example, a pin or other rotor stator mixer can be used.

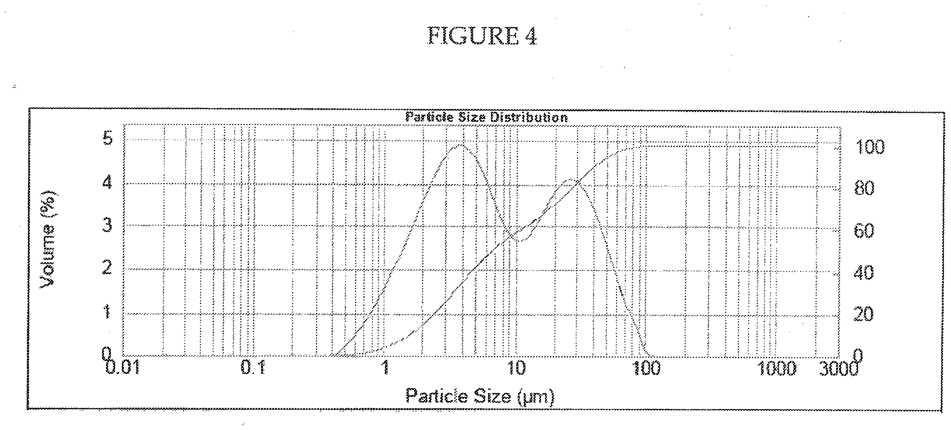

Because the optional ingredients are generally mixed into the emulsion using conventional, non-high pressure homogenization techniques, the resulting product is typically characterized by a bimodal particle size distribution. For example, as shown in FIG. 4 and as described in more detail in Example 3, a first mode corresponds to the oil droplets of the emulsion produced by high pressure homogenization and the second mode having larger particle sizes than the first mode can be attributed to ingredients added after high pressure homogenization, By one approach, the bimodal distribution, includes more particles in the first mode than in the second mode. In one aspect, the first mode ranges from about 0.4 microns to about 10 microns and the second mode ranges from about 0 microns to about 100 microns with a saddle point between the two modes at about 10 microns.

The high fat emulsion-based food products described herein may be prepared in batch, semi-continuous, or continuous processes. The high fat emulsion-based food products described herein can be used to make mayonnaise, savory sauces, dressings, and the like. The high fat emulsions can also be used in bakery items and desserts, such as custards, cakes, pies, and the like.

These and other advantages of the emulsion-based food products described herein will became apparent to those skilled in the art upon consideration of the present specification.

### EXAMPLES

### EXAMPLE 1

A mayonnaise premix can be prepared according to the following process and recipe. A "Water/Vinegar Mix" is first prepared by mixing 78.86 percent water and 21.14 percent Spirit Vinegar (10 percent). Also, 90.9 percent soybean oil and 9.1 percent enzyme-modified egg yolk powder (Emultherm KSMS from OVOBEST Eiprodukte GmbH & Co. KG (Germany)) is mixed to form an egg/oil mixture. Then 99.28 percent of the egg/oil mixture is combined with 0.72 percent xanthan gum to provide an "Egg-Oil-Xanthan Mix." The ingredients of Table 1 below are then mixed in a Leusomix apparatus from Luishuis Projects & Engineering B.V., (Hengolo, Netherlands) at 50 Hz to form a pre-emulsion.

**TABLE 1**

| **Ingredient** | **Amount** |
|---|---|
| Soybean oil | 53,6 percent |
| Water/Vinegar Mix | 31.7 percent |
| Egg-Oil-Xanthan Mix | 14.7 percent |

The pre-emulsion is homogenized in two stages at high pressure, with the first step at 70 bar and the second step at 30 bar, using a Tetra Pak TAM 25/315bar from Tetra Pak Processing Components (Lund, Sweden).

The resulting emulsion had a viscosity of about 200 Pa·s as measured with a Brookfield viscometer (spindle T-C at 2.5 rpm) within, three minutes of completion of homogenization at about 20 degrees Celsius. The emulsion has a white, creamy appearance and thick texture, a fat content of about 66.9 percent, and a protein content of about 0.37 percent.

### EXAMPLE 2

The inventive emulsion of Example 1 is compared to two commercially-available mayonnaise products: (1) THOMY^{®} Mayonnaise referred to herein as "THOMY^{®} Full Fat" (Nestlé, Germany; advertized as including 80 percent sunflower oil, 7 percent egg yolk, and vinegar, sugar, mustard, salt, and spices); and (2) THOMY^{®} Salat Mayonnaise referred to herein as "THOMY^{®} Low Fat" (Nestlé, Germany; advertized as including 50 percent sunflower oil, water, spirit vinegar, sugar, mustard, milk sugar, salt, modified starch, egg yolk, citric acid, and flavors).

The viscosities of the THOMY^{®} products were measured using a Brookfield viscometer (spindle T-C at 2.5 rpm) at about 20 degrees Celsius. The THOMY^{®} Low Fat product had a viscosity of about 150 Pa·s and the THOMY^{®} Full Fat product had a viscosity of 120 Pa·s. As described herein, generally the viscosity is measured either immediately after homogenization or after twenty-four hours at room temperature. However, as both THOMY^{®} products are commercial products, it is not known when the products were manufactured or how long it had been since homogenization.

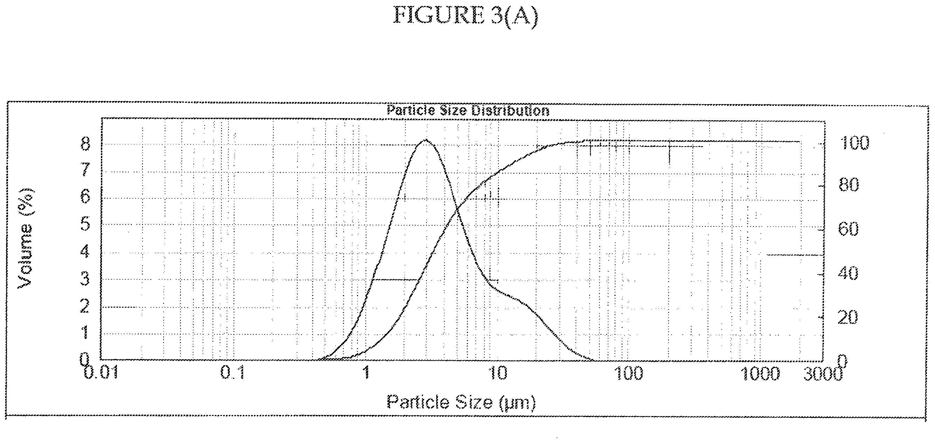

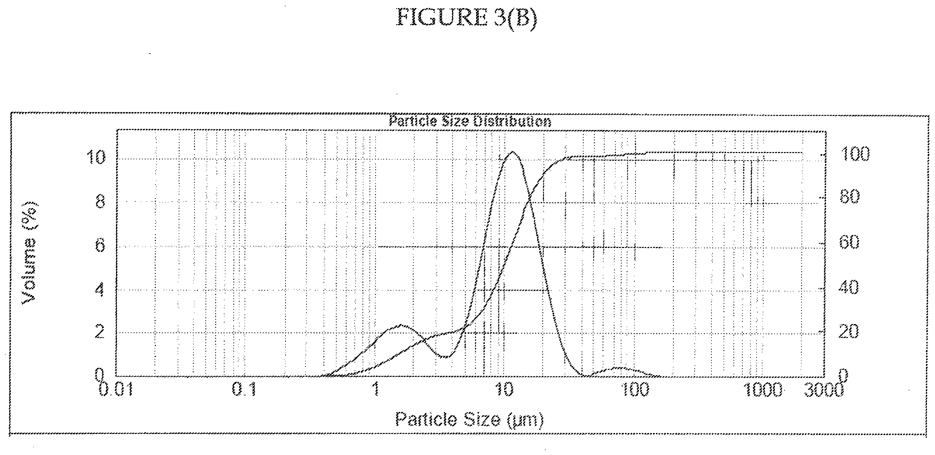

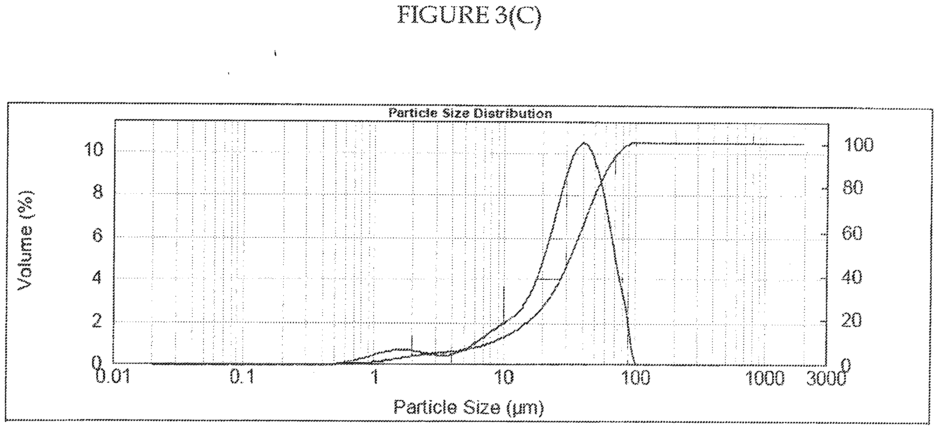

Oil droplet sizes of the inventive and commercial products were measured using a Mastersizer 2000 particle size analyzer (Malvern Instruments of Malvern, Worchestershire, United Kingdom). The oil droplet size of the inventive product was measured twenty-four hours at room temperature after homogenization, The oil droplet data is presented in the NMR spectrograms shown in FIG, 3(A)-(C). FIGS. 3(A), 3B), and 3(C) show the oil droplet size data for the inventive emulsion, THOMY^{®} Full Fat, and THOMY^{®} Low Fat, respectively. The numerical data is presented in Table 2 below.

**TABLE 2**

| | **d(0.025) microns** | **d(0,5) microns** | **d(0.975) microns** |
|---|---|---|---|
| **Inventive Sample** | | | |
| Average (n=3) | 2.0 | 3.2 | 5.5 |
| STDEV | 0.2 | 0.1 | 0.2 |
| RSD | 7,8 | 3,6 | 3.1 |

| **THOMY^{®} Full Fat** | | | |
|---|---|---|---|
| Average (n=3) | 7.8 | 9.8 | 12.2 |
| STDEV | 0.3 | 0.1 | 0.5 |
| RSD | 3.7 | 0.6 | 4.2 |

| **THOMY^{®} Low Fat** | | | |
|---|---|---|---|
| Average (n=3) | 13.6 | 19.7 | 30.6 |
| STDEV | 3.3 | 0.7 | 9.3 |
| RSD | 24.7 | 3.7 | 30.3 |
| * d(0.025) means that 2.5 percent of the volume is due to droplets having a diameter less than or equal to "×" microns; d(0.5) means that 50 percent of the volume is due to droplets having a diameter less than or equal to "×" microns; and d(0.975) means that 97.5 percent of the volume is due to droplets having a diameter less than or equal to "×" microns. | | | |

As can be seen in the data above and as shown in FIGS. 3(A)-(C), the THOMY^{®} products had larger oil droplet particle sizes than the inventive sample. It is believed that the THOMY^{®} mayonnaise products are produced with conventional colloid mill technology and unmodified egg yolk.

### EXAMPLE 3

The inventive emulsion of Example 1 is then combined with additional ingredients to provide a mayonnaise dressing as described below.

A starch dry mix of 66.4 percent sugar, 17.5 percent modified waxy maize starch from Tate & Lyle (London, United Kingdom), 15.7 percent salt, 0.23 percent beta-carotene (1 percent) powder, and 0.18 percent paprika extract are combined using a batch tank with stirrer.

Then, 4.1. percent Spirit vinegar (10 percent), 60.7 percent water, and 35.2 percent of the starch dry mix as made above are combined to form a starch base using a batch tank with stirrer.

A flavored starch base is then prepared by combining 99.43 percent starch base with 0.41 percent Spice Emulsion 15822531. IFF from International Flavors & Fragrances (Oberhausen, Germany), and 0.16 percent Curcuma essence 615508 from Symrise AG (Holzminden, Germany),

The starch base is heated with direct steam injection to 92 degrees Celsius and held for about 5 minutes to cook-out the starch. The starch base is allowed to cool to about 35 degrees Celsius.

Finally, 24.55 percent flavored starch base is combined with 75.45 percent of the emulsion prepared according to Example 1 and mixed in a pin mixer at about 500 rpm for four seconds (continuous with 9 to/h flow-speed).

The resulting mayonnaise product has a total fat content of about 51 percent, a starch content of about 1.3 percent, a protein content' of about 0.3 percent, a titratable acidity of about 0.59 percent, pH of about 3.25, and a viscosity of about 70 Pa.s when measured within three minutes after mixing. After twenty-four hours at room temperature, the viscosity was about 197 Pa.s.

Oil droplet size of the final product is measured using a Mastersizer 2000 particle size analyzer (Malvern Instruments of Malvern, Worchestershire, United Kingdom) four weeks after homogenization. The oil droplet data is presented in the NMR spectrogram of PIG. 4. The numerical data is presented in Table 3 below.

| | **d (0.025) microns** | **d (0.5) microns** | **d (0.975) microns** |
|---|---|---|---|
| **Final Mayonnaise Product** | | | |
| Average (n=3) | 2.2 | 3.8 | 6.5 |
| STDEV | 0.2 | 0.1 | 0.6 |
| RSD | 6.8 | 1.5 | 9.6 |

As can be seen in FIG. 4, the particle size of the final product has a bimodal distribution, with the smaller particle sizes provided by the high pressure homogenization of the emulsion of Example and the larger sizes provided by the ingredients added after homogenization.

While the emulsions, food products, and methods herein disclosed have been described by means of specific embodiments, examples and applications thereof, numerous modifications and variations could be made thereto by those skilled in the art. Unless specified otherwise, all percentages and ratios are by weight.

## Claims

1. A method for preparing an emulsion-based food product, the method comprising:
combining about 55 to about 72 percent oil, about 0.2 to about 2.0 percent enzyme-modified egg, about 20 percent to about 40 percent water, and edible acidulant to provide a mixture; and
treating the mixture with high pressure homogenization for a time and at a pressure effective to provide an emulsion, the emulsion having an average oil droplet size of about 0.8 to about 10 microns and a viscosity of about 200 to about 400 Pa.s when measured with a Brookfield viscometer, spindle T-C at 2.5 rpm, at room temperature twenty-four hours after homogenization,
wherein the emulsion further comprises about 0.01 to about 0.15 percent hydrocolloid stabilizer,
wherein the enzyme-modified egg is egg yolk treated with phospholipase, and
wherein the emulsion includes no protein other than that contributed by the enzyme-modified egg.

2. The method according to claim 1, wherein the method further comprises treating the mixture to provide a pre-emulsion prior to the high pressure homogenization step.

3. The method according to claim 1 or claim 2, wherein the amount of egg is selected so as to provide less than about 0.3 percent protein in the emulsion, preferably less than about 0.25 percent protein in the emulsion.

4. The method according to any of the preceding claims, wherein the amount of oil is about 60 to about 72 percent.

5. The method according to any of the preceding claims, wherein the emulsion has a mean oil droplet size of about 0.8 to about 5 microns, preferably a mean oil droplet size of about 0.8 to about 2 microns.

6. The method according to any of the preceding claims, wherein the emulsion is substantially free of starch.

7. The method according to any of the preceding claims, wherein the oil and enzyme-modified egg are provided in a ratio from about 27.5:1 to about 360:1.

8. The method according to any of the preceding claims, the method further comprising:
mixing the emulsion with additional ingredients to provide a mayonnaise product, the additional ingredients provided in amounts effective to reduce the weight percent of oil to less than about 55 weight percent based on the weight of the mayonnaise product.

9. The method according to claim 8, wherein the mayonnaise product includes less than about 2.5 percent starch.

10. The method according to claim 8 or claim 9, wherein the mayonnaise product includes about 40 to about 55 percent oil.

11. The method according to any of claims 8 to 10, wherein the mayonnaise product has a viscosity of about 180 to about 220 Pa.s when measured with a Brookfield viscometer, spindle T-C at 2.5 rpm, at room temperature twenty-four hours after mixing.

12. An emulsion comprising:
about 55 to about 72 percent oil, about 0.2 to about 2.0 percent enzyme-modified egg, about 20 percent to about 40 percent water, and edible acidulant,
wherein the emulsion has an average oil droplet size of about 0.8 to about 10 microns and a viscosity of about 200 to about 400 Pa.s when measured with a Brookfield viscometer, spindle T-C at 2.5 rpm, at room temperature twenty-four hours after the emulsion is formed, and
wherein the emulsion further comprises about 0.01 to about 0.15 percent hydrocolloid stabilizer,
wherein the enzyme-modified egg is egg yolk treated with phospholipase, and
wherein the emulsion includes no protein other than that contributed by the enzyme-modified egg.

13. The emulsion of claim 12, wherein the amount of oil is about 60 to about 72 percent.

14. The emulsion of claim 12 or claim 13, wherein the emulsion has a mean oil droplet size of about 0.8 to about 5 microns and/or wherein the emulsion is substantially free of starch.

## Patentansprüche

1. Verfahren zum Zubereiten eines Lebensmittelprodukts auf Emulsionsbasis, das Verfahren umfassend:
Kombinieren von etwa 55 bis etwa 72 Prozent Öl, etwa 0,2 bis etwa 2,0 Prozent enzymmodifiziertem Ei, etwa 20 Prozent bis etwa 40 Prozent Wasser und essbarem Säuerungsmittel, um eine Mischung bereitzustellen, und
Behandeln der Mischung mit Hochdruckhomogenisierung eine Zeit lang und bei einem Druck, der wirksam ist, um eine Emulsion bereitzustellen, wobei die Emulsion eine durchschnittliche Öltropfengröße von etwa 0,8 bis etwa 10 Mikrometer und eine Viskosität von etwa 200 bis etwa 400 Pa.s aufweist, wenn mit einem Brookfield-Viskosimeter, T-C-Spindel bei 2,5 U/min, bei Raumtemperatur vierundzwanzig Stunden nach einer Homogenisierung gemessen,
wobei die Emulsion ferner etwa 0,01 bis etwa 0,15 Prozent Hydrokolloidstabilisator umfasst,
wobei das enzymmodifizierte Ei Eigelb ist, das mit Phospholipase behandelt ist, und
wobei die Emulsion kein anderes Protein als das einschließt, das durch das enzymmodifizierte Ei beigetragen wird.

2. Verfahren nach Anspruch 1, wobei das Verfahren ferner das Behandeln der Mischung umfasst, um eine Voremulsion vor dem Hochdruckhomogenisierungsschritt bereitzustellen.

3. Verfahren nach Anspruch 1 oder 2, wobei die Menge an Ei so ausgewählt wird, dass sie weniger als etwa 0,3 Prozent Protein in der Emulsion, vorzugsweise weniger als etwa 0,25 Prozent Protein in der Emulsion bereitstellt.

4. Verfahren nach einem der vorstehenden Ansprüche, wobei die Menge an Öl etwa 60 bis etwa 72 Prozent beträgt.

5. Verfahren nach einem der vorstehenden Ansprüche, wobei die Emulsion eine mittlere Öltropfengröße von etwa 0,8 bis etwa 5 Mikrometer, vorzugsweise eine mittlere Öltropfengröße von etwa 0,8 bis etwa 2 Mikrometer aufweist.

6. Verfahren nach einem der vorstehenden Ansprüche, wobei die Emulsion im Wesentlichen frei von Stärke ist.

7. Verfahren nach einem der vorstehenden Ansprüche, wobei das Öl und das enzymmodifizierte Ei in einem Verhältnis von etwa 27,5: 1 bis etwa 360: 1 bereitgestellt werden.

8. Verfahren nach einem der vorstehenden Ansprüche, das Verfahren ferner umfassend:
Mischen der Emulsion mit zusätzlichen Inhaltsstoffen, um ein Mayonnaiseprodukt bereitzustellen, wobei die zusätzlichen Inhaltsstoffe in Mengen bereitgestellt sind, die wirksam sind, um den Gewichtsprozentsatz von Öl auf weniger als etwa 55 Gewichtsprozent basierend auf dem Gewicht des Mayonnaiseprodukts zu reduzieren.

9. Verfahren nach Anspruch 8, wobei das Mayonnaiseprodukt weniger als etwa 2,5 Prozent Stärke einschließt.

10. Verfahren nach Anspruch 8 oder 9, wobei das Mayonnaiseprodukt etwa 40 bis etwa 55 Prozent Öl aufweist.

11. Verfahren nach einem der Ansprüche 8 bis 10, wobei das Mayonnaiseprodukt eine Viskosität von etwa 180 bis etwa 220 Pa.s aufweist, wenn mit einem Brookfield-Viskosimeter, T-C-Spindel bei 2,5 U/min, bei Raumtemperatur vierundzwanzig Stunden nach dem Mischen gemessen.

12. Emulsion, umfassend:
etwa 55 bis etwa 72 Prozent Öl, etwa 0,2 bis etwa 2,0 Prozent enzymmodifiziertes Ei, etwa 20 Prozent bis etwa 40 Prozent Wasser und essbares Säuerungsmittel,
wobei die Emulsion eine durchschnittliche Öltropfengröße von etwa 0,8 bis etwa 10 Mikrometer und eine Viskosität von etwa 200 bis etwa 400 Pa.s aufweist, wenn mit einem Brookfield-Viskosimeter, T-C-Spindel bei 2,5 U/min, bei Raumtemperatur vierundzwanzig Stunden nach dem Ausbilden der Emulsion gemessen, und
wobei die Emulsion ferner etwa 0,01 bis etwa 0,15 Prozent Hydrokolloidstabilisator umfasst,
wobei das enzymmodifizierte Ei Eigelb ist, das mit Phospholipase behandelt ist, und wobei die Emulsion kein anderes Protein als das einschließt, das durch das enzymmodifizierte Ei beigetragen wird.

13. Verfahren nach Anspruch 12, wobei die Menge an Öl etwa 60 bis etwa 72 Prozent beträgt.

14. Emulsion nach Anspruch 12 oder 13, wobei die Emulsion eine mittlere Öltropfengröße von etwa 0,8 bis etwa 5 Mikrometer aufweist und/oder wobei die Emulsion im Wesentlichen frei von Stärke ist.

## Revendications

1. Procédé permettant de préparer un produit alimentaire à base d'émulsion, le procédé comprenant :
la combinaison d'environ 55 à environ 72 pour cent d'huile, d'environ 0,2 à environ 2,0 pour cent d'oeuf modifié par enzyme, d'environ 20 pour cent à environ 40 pour cent d'eau, et d'un acidulant comestible pour fournir un mélange ; et
le traitement du mélange avec une homogénéisation à haute pression pendant une durée et à une pression efficaces pour fournir une émulsion, l'émulsion ayant une taille moyenne de gouttelettes d'huile d'environ 0,8 à environ 10 micromètres et une viscosité d'environ 200 à environ 400 Pa.s lorsqu'elle est mesurée avec un viscosimètre Brookfield, un mobile T-C à 2,5 tr/min, à température ambiante vingt-quatre heures après homogénéisation,
dans lequel l'émulsion comprend en outre d'environ 0,01 à environ 0,15 pour cent de stabilisant hydrocolloïde,
dans lequel l'oeuf modifié par enzyme est du jaune d'oeuf traité par phospholipase, et
dans lequel l'émulsion ne comporte aucune protéine autre que celle apportée par l'oeuf modifié par enzyme.

2. Procédé selon la revendication 1, dans lequel le procédé comprend en outre le traitement du mélange pour fournir une pré-émulsion avant l'étape d'homogénéisation à haute pression.

3. Procédé selon la revendication 1 ou la revendication 2, dans lequel la quantité d'oeuf est sélectionnée de manière à fournir moins d'environ 0,3 pour cent de protéine dans l'émulsion, de préférence moins d'environ 0,25 pour cent de protéine dans l'émulsion.

4. Procédé selon l'une quelconque des revendications précédentes, dans lequel la quantité d'huile est d'environ 60 à environ 72 pour cent.

5. Procédé selon l'une quelconque des revendications précédentes, dans lequel l'émulsion a une taille moyenne de gouttelettes d'huile d'environ 0,8 à environ 5 micromètres, de préférence une taille moyenne de gouttelettes d'huile d'environ 0,8 à environ 2 micromètres.

6. Procédé selon l'une quelconque des revendications précédentes, dans lequel l'émulsion est sensiblement exempte d'amidon.

7. Procédé selon l'une quelconque des revendications précédentes, dans lequel l'huile et l'oeuf modifié par enzyme sont fournis en un rapport allant d'environ 27,5:1 à environ 360:1.

8. Procédé selon l'une quelconque des revendications précédentes, le procédé comprenant en outre :
le mélange de l'émulsion avec des ingrédients supplémentaires pour fournir un produit de mayonnaise, les ingrédients supplémentaires étant fournis en des quantités efficaces pour réduire le pourcentage en poids d'huile à moins d'environ 55 pour cent en poids sur la base du poids du produit de mayonnaise.

9. Procédé selon la revendication 8, dans lequel le produit de mayonnaise comporte moins d'environ 2,5 pour cent d'amidon.

10. Procédé selon la revendication 8 ou la revendication 9, dans lequel le produit de mayonnaise comporte d'environ 40 à environ 55 pour cent d'huile.

11. Procédé selon l'une quelconque des revendications 8 à 10, dans lequel le produit de mayonnaise a une viscosité d'environ 180 à environ 220 Pa.s lorsqu'elle est mesurée avec un viscosimètre Brookfield, un mobile T-C à 2,5 tr/min, à température ambiante vingt-quatre heures après le mélange.

12. Émulsion comprenant :
d'environ 55 à environ 72 pour cent d'huile, d'environ 0,2 à environ 2,0 pour cent d'oeuf modifié par enzyme, d'environ 20 pour cent à environ 40 pour cent d'eau, et un acidulant comestible,
dans laquelle l'émulsion a une taille moyenne de gouttelettes d'huile d'environ 0,8 à environ 10 micromètres et une viscosité d'environ 200 à environ 400 Pa.s lorsqu'elle est mesurée avec un viscosimètre Brookfield, un mobile T-C à 2,5 tr/min, à température ambiante vingt-quatre heures après que l'émulsion est formée, et
dans laquelle l'émulsion comprend en outre d'environ 0,01 à environ 0,15 pour cent de stabilisant hydrocolloïde,
dans laquelle l'oeuf modifié par enzyme est du jaune d'oeuf traité par phospholipase, et dans laquelle l'émulsion ne comporte aucune protéine autre que celle apportée par l'oeuf modifié par enzyme.

13. Procédé selon la revendication 12, dans lequel la quantité d'huile est d'environ 60 à environ 72 pour cent.

14. Émulsion selon la revendication 12 ou la revendication 13, dans laquelle l'émulsion a une taille moyenne de gouttelettes d'huile d'environ 0,8 à environ 5 micromètres et/ou dans laquelle l'émulsion est sensiblement exempte d'amidon.
